# EUROPEAN PATENT APPLICATION

(11) **EP 1 146 654 A2**
(43) Date of publication of application: **17.10.2001**
(21) Application number: 01107400.2
(22) Date of filing: 26.03.2001
(51) Int. Cl.: H04B 1/16, H04B 1/40

(54) **Communication device for mobile unit**

(30) Priority: 29.03.2000 JP 2000091735
(71) Applicant: Pioneer Corporation, Meguro-ku, Tokyo (JP)
(72) Inventor: Nakamura, Shigeki, Ohaza Yamada, Kawagoe-shi, Saitama (JP)
(74) Representative: Manitz, Finsterwald & Partner GbR

(57) **Abstract**

A communication device for a mobile unit designed to save power without inviting a deterioration in communication performance. In the communication device for performing radio communication by a frame unit having a plurality of transmission blocks each of which comprises a transmission information portion and a control data portion relative to the transmission information portion, the communication device includes a transmission level adjusting part for adjusting the respective transmission levels of the transmission information portion and the control data portion so as to make them differ from each other.

## Description

### BACKGROUND OF THE INVENTION

### 1. Field of the Invention

The present invention relates to a communication device for a mobile unit, such as a portable telephone.

### 2. Description of Related Art

In a communication device, such as a portable telephone, for a mobile unit, a battery used as a power supply is housed for carrying the communication device or mounting the device in a vehicle, and, in order to control the power consumption by the battery, the communication device is expected to save power. However, deterioration in communication performance, such as the cutoff of a conversation on the telephone, which is brought about by a reduction in power consumption of the device must be avoided.

### OBJECT AND SUMMARY OF THE INVENTION

It is therefore an object of the present invention to provide a communication device for a mobile unit designed to save power without inviting a deterioration in communication performance.

The present invention is characterized in that, in a communication device for a mobile unit for performing radio communication by a frame unit having a plurality of transmission blocks each of which comprises a transmission information portion and a control data portion relative to the transmission information portion, the communication device includes a transmission level adjusting part for adjusting the respective transmission levels of the transmission information portion and the control data portion so as to make them differ from each other.

Further more, the present invention is characterized in that, in a communication device for a mobile unit for performing radio communication by a frame unit capable of constructing a plurality of transmission blocks each of which comprises digital data having transmission information in one part thereof, the communication device includes a transmission level adjusting part for adjusting the transmission level of the digital data necessary for bit synchronization capture when the transmission block is received so as to become greater than the transmission level of the transmission information.

### BRIEF DESCRIPTION OF THE DRAWINGS

Fig. 1 is a block diagram showing the structure of an embodiment of a transmitting circuit of the communication device for a mobile unit of the present invention;
Fig. 2 is a diagram showing a communication method according to the TDMA system;
Fig. 3 a diagram showing the structure of each channel and the upper and lower limits of an envelope waveform of a transmission signal;
Fig. 4 is a flowchart showing the operation of a microcomputer of Fig. 1;
Fig. 5 is a diagram showing a change in transmission power in a slot;
Fig. 6 is a block diagram showing the structure of a transmitting circuit as another embodiment of the present invention; and
Fig. 7 is a diagram showing a change in transmission power of the transmitting circuit of the CDMA communication system.

### DETAILED DESCRIPTION OF THE PREFERRED EMBODIMENTS

Embodiments of the present invention will be hereinafter described in detail with reference to the attached drawings.

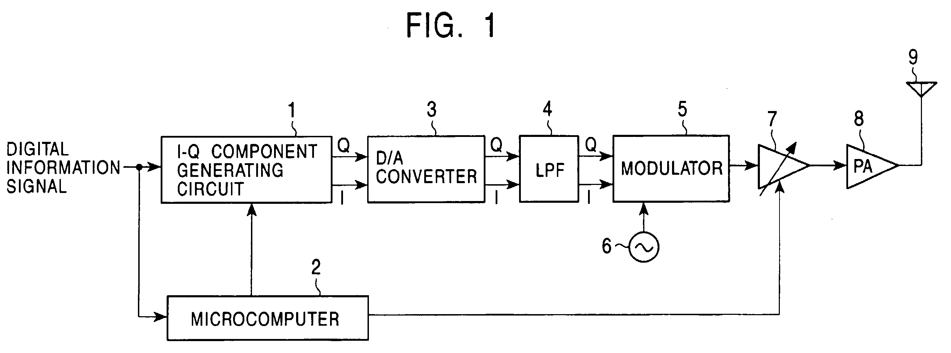

As an embodiment of the present invention, Fig. 1 shows a basic structure of a transmitting circuit of a communication device for a mobile unit according to a TDMA system (Time Division Multiple Access system). In the transmitting circuit, an I-Q component generating circuit 1 converts a digital information signal to be transmitted into a quadrature component Q and an in-phase component I and outputs them in accordance with the digital phase modulation of a π/4 shift DQPSK method. The operation of the I-Q component generating circuit 1 is controlled by a microcomputer 2.

A D/A converter 3 is connected to an output of the I-Q component generating circuit 1. The D/A converter 3 changes the transferred symbol data of I and Q channels to corresponding analog data and supplies it to an LPF 4. The LPF 4 passes only a given low-frequency band of an input signal, in other words, the LPF 4 removes a higher harmonic component thereof, and supplies it to a modulator 5. The modulator 5 is of, for example, a Costas type, and performs a modulation of the π/4 shift DQPSK method while treating the output signal of the LPF 4 as a signal to be transmitted on the basis of an oscillating output signal of a local oscillator 6. The oscillating output signal of the local oscillator 6 has a predetermined carrier frequency in the communication device concerned, and this becomes the central frequency in that modulation. A transmission signal that is a modulation output of the modulator 5 is supplied to a power amplifier 8 through a variable gain amplifier 7. The variable gain amplifier 7 is disposed as a pre-amplifier of the power amplifier 8, and an amplification gain is controlled by the microcomputer 2. The power amplifier 8 further amplifies the transmission signal amplified by the variable gain amplifier 7, and applies it to an antenna 9, and, as a result, the transmission signal is radiated from the antenna 9 in the form of transmission waves.

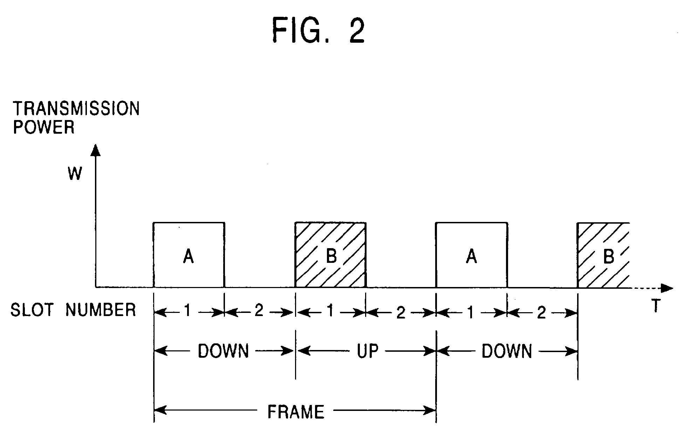

As shown in Fig. 2, in the thus constructed transmitting circuit; a TDMA transmission signal transmitted along the time series (T) performs a downward communication (from a base station to a moving apparatus) and an upward communication (from the moving apparatus to the base station) per frame. One channel is allocated by a pair of time zones, i.e., slots (transmission block) that have been allocated to each communication period in the TDMA frame. In order to facilitate understanding, Fig. 2 shows a case where two channels (two slots in. each of the down and up) exist in one frame. For example, in slot number 1, data A is transmitted during the downward communication, and data B is transmitted during the upward communication, as shown in the figure. In other words, the transmitting circuit of the base station (or, of the moving apparatus) transmits (or, receives) data A, and receives (or, transmits) data B in the time zone indicated by slot number 1.

The channel can be subdivided into a control channel and a communication channel. The control channel is to be used in communication for setting the communication channel, and in practice, the communication channel is to transmit information for performing communication, such as a conversation on the telephone.

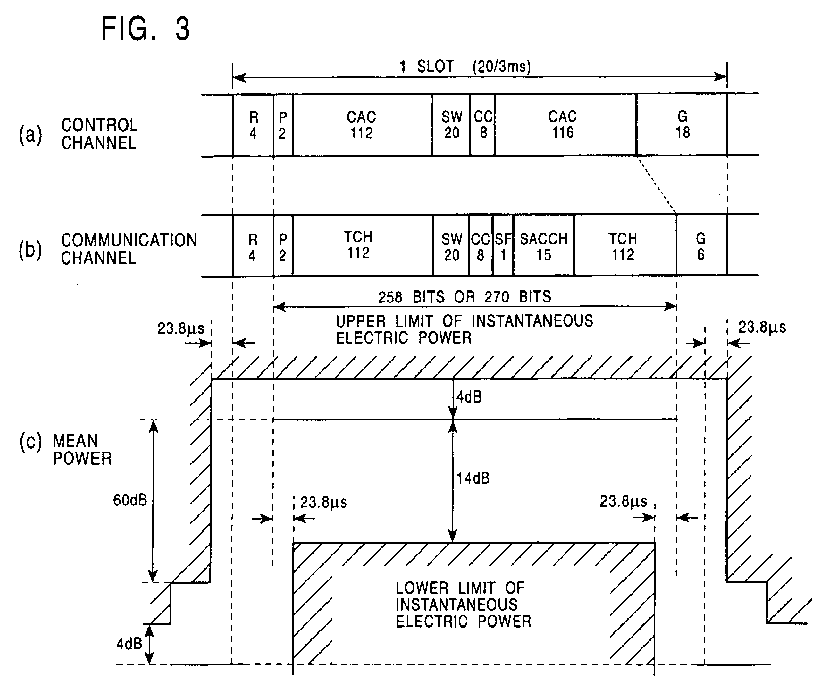

There are cases in which the slot is in a burst state, and it consists of 280 bits, for example. The slot of the control channel has a structure shown in (a) of Fig. 3, for example, and the slot of the communication channel has a structure shown in (b) of Fig. 3, for example. In the figure, G designates a guard time, P designates a preamble (i.e., bit necessary for bit synchronization), R designates a lamp time part (burst transient response bit), SW designates a sync-word (bit necessary for frame synchronization), CAC designates a common access channel for radio system control, TCH designates a traffic channel that carries information, and SACCH designates an associated control channel that is associated with TCH. The guard time G is provided so that the waveforms of adjoining slots never overlap with each other because of, for example, a synchronous deviation. Herein, the traffic channel TCH and the associated control channel SACCH are transmission information, and the preamble P and the sync-word SW are control data necessary for synchronous capture. The numerical values in (a) and (b) of Fig. 3 designate bit number.

Since it is impossible to steeply increase the output of the power amplifier 8, RCR STD-27, which is the specification of PDC (Personal Digital Cellular), prescribes that the envelope waveform of the output signal of the power amplifier 8 with respect to the slot is only required to change within the range between the upper and lower limits shown by the oblique lines in (c) of Fig. 3. The mean power is 29 dBm, and its accuracy is +20%, and -50%.

The microcomputer 2 controls the gain of the variable gain amplifier 7 according to items in the slot to be transmitted. Next, the gain control will be described with reference to a flowchart.

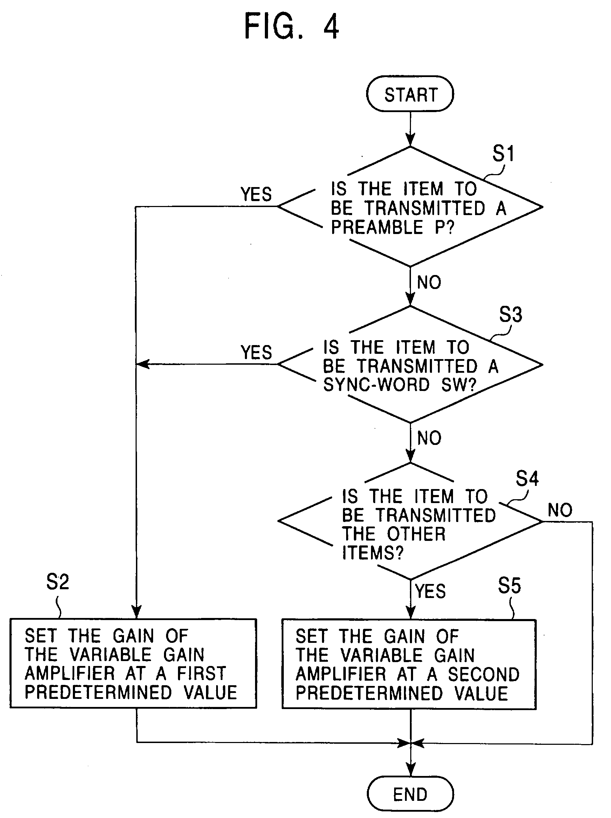

As shown in Fig. 4, the microcomputer 2 determines whether the item to be transmitted is a preamble P or not (step S1). If it is a preamble P corresponding to a control data portion, the gain of the variable gain amplifier 7 is set at a first predetermined value (step S2). If it is not a preamble P, the microcomputer 2 determines whether the item to be transmitted is a sync-word SW or not (step 53). If it is a sync-word SW corresponding to a control data portion, the stage proceeds to step S2, and the gain of the variable gain amplifier 7 is set at the first predetermined value. If it is not a sync-word SW, the microcomputer 2 determines whether the item to be transmitted is one of the other items or not (step S4). In the slot of a communication channel, the other items are a transmission information portion, such as the traffic channel TCH, and a control data portion, such as the associated control channel ACCH, excluding a preamble P, sync-word SW, and guard time G. If it is the other item, the gain of the variable gain amplifier 7 is set at a second predetermined value that is smaller than the first predetermined value (step S5).

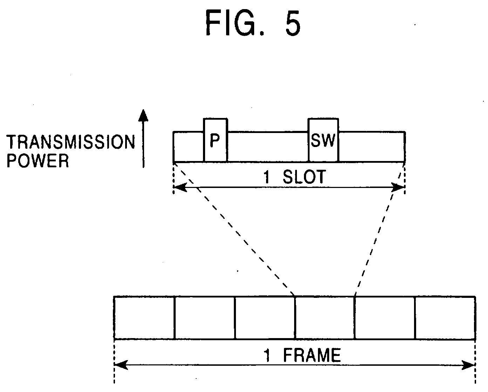

As shown in Fig. 5, as a result of the gain control of the variable gain amplifier 7 by the microcomputer 2, the transmission power by the power amplifier 8 becomes higher during a period corresponding to each of the preamble P and the sync-word SW than during the other periods in the slot. The envelope waveform of this transmission signal is included within the range between the upper and lower limits shown in (c) of Fig. 3.

The preamble P and the sync-word SW of each slot are indispensable because the preamble P takes bit synchronization at the receiving side and because the sync-word SW takes frame synchronization at the receiving side. Accordingly, if the envelope waveform of the output signal of the power amplifier 8 during periods corresponding to the preamble P and the sync-word SW is heightened more than during the other periods, the synchronous capture per slot will be easily and steadily carried out at the receiving side. Additionally, several bits following the preamble P are needed besides the preamble P in order to capture the stable bit synchronization, and therefore those bits may be arranged so as to set the gain of the variable gain amplifier 7 at the first predetermined value.

In the above embodiment, the envelope waveform of the output signal of the power amplifier 8 is heightened during the periods corresponding to the preamble P and the sync-word SW more than during the other periods. However, the period corresponding to the preamble P and the period corresponding to the sync-word SW do not need to have the same transmission power. What is needed is for it to be heightened more than during the other periods.

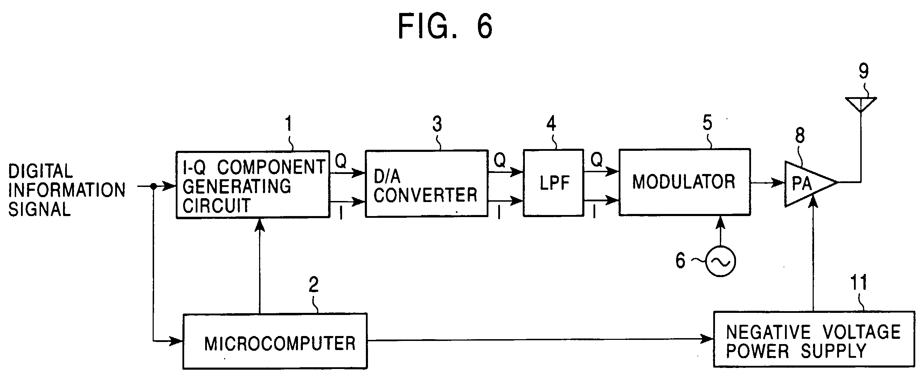

Further, in the above embodiment, the transmission power is changed by the gain control of the variable gain amplifier 7 in the slot. However, without providing the variable gain amplifier 7, the transmission power may be changed in the slot by controlling the applied voltage of a negative voltage power supply 11 onto the power amplifier 8 by means of the microcomputer 2, as shown in Fig. 6.

Further, in the above embodiment, information necessary for the bit synchronization and the frame synchronization is described as an example. However, without being limited to this, other information may be used if it is a synchronizing signal needed when a transmission block, such as a slot, is received. Herein, the phrase "when a transmission block is received" means "when a transmission block is received by a relay station, a base station, or the communication device itself for a mobile unit."

Further, since there is a case in which some communication systems have difficulty in extracting only information (control data) necessary for synchronization, the transmission level may be raised by extracting peripheral information including the information necessary for synchronization in this case.

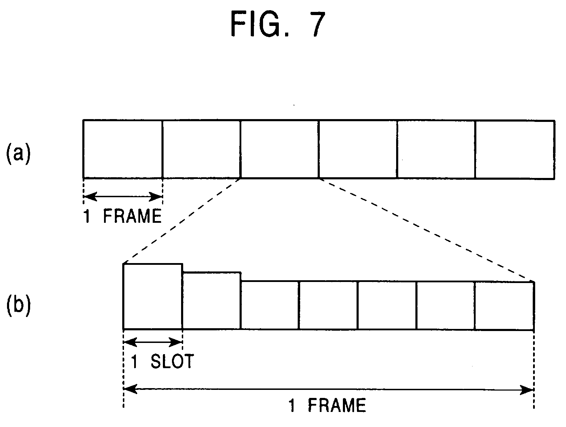

Further, in the above embodiment, a case in which the present invention is applied to the TDMA type transmitting circuit is described. However, without being limited to this, the present invention may be applied to a transmitting circuit of the type that has transmission information and information necessary for various synchronizations in a slot. For example, if the present invention is applied to a transmitting circuit of the CDMA system (Code Division Multiple Access system), each of a plurality of consecutive frames, as shown in (a) of Fig. 7, is provided with slots having different transmission powers, as shown in (b) of Fig. 7. In each slot, an arrangement may be made to raise the transmission level of information necessary for the synchronous capture when the slot is received.

Further, in each of the above embodiments, the signal level of the transmission signal is described as a structure to be always adjusted. However, without being limited to this, the present invention may be made according to the receiving status. For example, a judgment may be made about whether the receiving status is good or not in accordance with the error percentage of a received signal or the receiving level thereof. If good, the processing of the present invention is carried out, and, if not, the processing thereof is not carried out.

As described above, according to the communication device for a mobile unit of the present invention, the transmission power of a part necessary for synchronization is increased at the receiving side, and therefore it is possible to save electric power without inviting a deterioration in communication performance.

## Claims

1. A communication device for a mobile unit for performing radio communication in frames having a plurality of transmission blocks each of which comprises a transmission information portion and a control data portion relative to the transmission information portion, the communication device for a mobile unit comprising:
a modulating part which modulates said frames according to a predetermined modulation scheme and genertes a modulated output signal; and
a transmission level adjusting part which receives said modulated output signal of said modulating part and adjusts transmission levels of said transmission information portion and said control data portion in said modulated output signal respectively so that said transmission levels differ from each other.

2. The communication device for a mobile unit as claimed in claim 1, wherein said transmission level adjusting part adjusts the transmission level of said control data portion to be higher than the transmission level of said transmission information portion.

3. The communication device according to Claim 1, wherein the transmission level adjusting part performs an adjustment so that a transmission level of a part in said control data portion necessary for capturing synchronization when said transmission block is received becomes higher than the transmission level of said transmission information portion.

4. The communication device according to Claim 2, wherein the transmission level adjusting part performs an adjustment so that a transmission level of a part in said control data portion necessary for capturing synchronization when said transmission block is received becomes higher than the transmission level of said transmission information portion.

5. A communication device for a mobile unit for performing radio communication in frames capable of constructing a plurality of transmission blocks each of which comprises digital data having transmission information in one part thereof, comprising:
a modulating part which modulates said frames according to a predetermined modulation scheme and generates a modulated output signal; and
a transmission level adjusting part which receives said modulated output signal of said modulating part and performs an adjustment so that a transmission level of the digital data necessary for a bit synchronization capture when said transmission blocks are received becomes higher than a transmission level of said transmission information.

6. The communication device for a mobile unit as claimed in claim 1, wherein said transmission level adjusting part changes the transmission level in said transmission block.

7. The communication device for a mobile unit as claimed in claim 5, wherein said transmission level adjusting part changes the transmission level in said transmission block.

8. The communication device for a mobile unit as claimed in claim 1, wherein said transmission level adjusting part comprises a variable gain amplifier before a power amplifier of a transmitting circuit and a control part for changing the gain of said variable gain amplifier in accordance with each of said transmission information portion to be transmitted and said control data portion to be transmitted.

9. The communication device for a mobile unit of Claim 1, wherein said transmission level adjusting part comprises a variable power supply for supplying a voltage to a bias adjusting terminal of a power amplifier of a transmitting circuit and a control part for changing a voltage from said variable power supply to the power amplifier in accordance with each of said transmission information portion to be transmitted and said control data portion to be transmitted.
